# EUROPÄISCHE PATENTSCHRIFT

(11) **EP 3 555 172 B1**
(45) Veröffentlichungstag und Bekanntmachung des Hinweises auf die Patenterteilung: **09.09.2020**
(21) Anmeldenummer: 17816851.4
(22) Anmeldetag: 18.12.2017
(51) Int. Cl.: C08G 64/02, C08G 64/30, C08G 18/44

(54) **VERFAHREN ZUR HERSTELLUNG VON (CYCLO)ALIPHATISCHEN POLYCARBONATPOLYOLEN MIT NIEDRIGER REAKTIVITÄT**
METHOD FOR THE PREPARATION OF (CYCLO)ALIPHATIC POLYCARBONATE POLYOLS WITH LOW REACTIVITY
PROCÉDÉ DE PRODUCTION DE POLYOLES POLYCARBONATIQUES (CYCLO)ALIPHATIQUES À FAIBLE RÉACTION

(30) Priorität: 19.12.2016 EP 16205050
(43) Veröffentlichungstag der Anmeldung: 23.10.2019
(73) Patentinhaber: Covestro Deutschland AG, 51373 Leverkusen (DE)
(72) Erfinder: LUDEWIG, Michael, 51519 Odenthal (DE); SOMMER, Stefan, 51375 Leverkusen (DE); BREUER, Holger, 41564 Kaarst (DE); GRAHL, Michael, 51375 Leverkusen (DE)
(74) Vertreter: Levpat
(86) Internationale Anmeldenummer: PCT/EP2017/083354
(87) Internationale Veröffentlichungsnummer: WO 2018/114827

(56) Entgegenhaltungen:
- EP-A1- 2 213 695
- EP-A1- 2 281 848
- JP-A- 2002 030 143
- US-A- 4 005 121

## Beschreibung

Die vorliegende Erfindung betrifft ein Verfahren zur Herstellung von (cyclo)aliphatischen Polycarbonatpolyolen und offenbart die nach diesem Verfahren erhältlichen (cyclo)aliphatischen Polycarbonatpolyole. Außerdem betrifft die vorliegende Erfindung die Verwendung von organischen Sulfonsäuren mit einem Molekulargewicht von 250 bis 1000 g/mol und mindestens einer verzweigten oder unverzweigten Alkylsubstitution mit mindestens vier Kohlenstoffatomen als Stopper bei der Polycarbonatpolyol-Herstellung. Die Erfindung offenbart auch eine aus dem (cyclo)aliphatischen Polycarbonatpolyol erhältliche wässrige Polyurethandispersion, ein Zwei-Komponenten-System oder ein thermoplastisches Polyurethan sowie die aus diesen Gegenständen erhältlichen Beschichtungen oder Formkörper.

Oligo- oder Polycarbonatpolyole sind wichtige Vorprodukte, beispielsweise bei der Herstellung von Kunststoffen, Lacken und Klebstoffen. Sie werden z.B. mit Isocyanaten, Epoxiden, (cyclischen) Estern, Säuren oder Säureanhydriden umgesetzt (DE-A 1955902, EP-A 0 343 572). Sie können prinzipiell aus aliphatischen Polyolen durch Umsetzung mit Phosgen (z.B. DE-A 1 595 446, US-A 4533729), bis-Chlorkohlensäureestern (z.B. DE-A 857 948), Diarylcarbonaten (z.B. DE-A 1 915 908), cyclischen Carbonaten (z.B. DE-A 2 523 352, US-A 787632, DE-A 1495299) oder Dialkylcarbonaten (z.B. DE-A 2 555 805, EP-A 0 343 572, EP 0 533 275) hergestellt werden.

Es ist bekannt, dass bei Umsetzung von Arylcarbonaten wie z.B. Diphenylcarbonat mit aliphatischen Polyolen wie z.B. 1,6-Hexandiol ein hinreichender Reaktionsumsatz allein durch Entfernung der freiwerdenden alkoholischen Verbindung (z.B. Phenol) im Zuge der Gleichgewichtsverlagerung der Reaktion erreicht werden kann (z. B. EP-A 0 533 275).

Kommen jedoch Alkylcarbonate (z.B. Dimethylcarbonat) zum Einsatz, so werden häufig Umesterungskatalysatoren eingesetzt. Dazu sind bereits eine Vielzahl verschiedener Katalysatoren vorgeschlagen worden, wie z.B. Zinn oder Zinn-organische Verbindungen wie beispielsweise Dibutylzinndilaurat oder aber auch Dibutylzinnoxid (DE-A 2 5233 52, EP-A 0 364 052, EP-A 0 600 417, EP-A 0 343 572, EP-A 0 302 712) oder auch Verbindungen des Titans wie z.B. Titantetrabutylat, Titan-tetraisopropylat oder Titandioxid (z.B. US-A 2 843 567, EP-A 0 849 303, EP-A 0 343 572, EP-A- 0 424 219, EP-A 0 754 714) oder auch organische, anorganische Verbindungen oder Komplexe der Seltenerdmetalle und Metallen der III. Nebengruppe des Periodensystems (EP-A 1 312 632, EP-A 1 477 508).

Diese aus dem Stand der Technik bekannten Umesterungskatalysatoren zur Herstellung von aliphatischen Oligocarbonatpolyolen durch Umsetzung von Alkylcarbonaten mit aliphatischen Polyolen weisen aber einige Nachteile auf.

In jüngster Zeit wurden Zinn-organische Verbindungen als toxikologisch bedenklich beim Menschen erkannt. Sie sind somit unerwünschte Bestandteile, die in Folgeprodukten der Polycarbonatpolyole verbleiben, sofern die bisher bevorzugten Verbindungen wie Dibutylzinnoxid oder Dibutylzinndilaurat als Katalysatoren zum Einsatz kommen.

Bei der Verwendung von Titan-Verbindungen als Katalysatoren kann es bei Lagerung des resultierenden Produktes zu unerwünschten Verfärbungen (Gelbfärbung) kommen, was u.a. auf die Anwesenheit von Ti(III)-Verbindungen neben gleichzeitig anwesender Ti(IV)-Verbindungen und/oder durch die Komplexbildungsneigung des Titans hervorgerufen wird.

Seltenerdmetalle weisen diese Nachteile zwar nicht auf, sind aber zunehmend schwerer verfügbar. Weiterhin sind sie weniger reaktiv und müssen in höheren Mengen beigesetzt werden.

Auch die Verwendung von Alkali- oder Erdalkali-Metallen sowie deren Oxide, Alkoxide, Carbonate, Borate oder Salze organischer Säuren ist bereits vielfach beschrieben (z.B. US-A 2 210 817, US-A 2 843 567, DE-A 2 523 352, DE-A 1 495 299, EP-A 0 849 303, EP-A 0 754 714, EP-A 0 533 275, WO 97/03104).

Trotzdem konnten sich solche Katalysatoren trotz ihrer leichten Verfügbarkeit bislang nicht wirklich durchsetzen. Typische Katalysatoren dieser Art, wie z.B. Natriummethanolat oder Natriumhydroxid (NaOH) sind sehr basisch und führen im fertigen Produkt zu einer unerwünscht hohen Reaktivität z.B. gegenüber Isocyanaten. Auch zunächst weniger basische Katalysatoren, wie z.B. Natriumhydrogencarbonat oder Natriumacetat werden im Reaktionsgeschehen über die Abspaltung von Kohlendioxid oder Essigsäure in sehr basische Spezies umgewandelt und führen zu den gleichen Nachteilen.

Es ist daher auch schon vorgeschlagen worden, durch eine Nachbehandlung des fertigen Polycarbonatdiols diesen Nachteil der zu hohen Reaktivität zu überwinden. So wird etwa in der DE 2 555 805 der Katalysator mit HCl-Gas neutralisiert und anschließend mit Wasser gewaschen und getrocknet. Auch in der EP-A 0 533 275 wird vorgeschlagen, den Katalysator mit einer equimolaren Menge einer Säure zu neutralisieren. Allerdings führt diese Maßnahme in der Regel zur Bildung eines im Produkt unlöslichen Salzes, was sich durch eine unerwünschte Trübung des Produktes äußert. In den Beispielen dieser Anmeldung wird dann auch auf eine Neutralisation verzichtet und der Katalysator mit Wasser ausgewaschen. Obwohl so im Labormaßstab sicherlich jeweils gute Produkte erhalten werden, ist ein Auswaschen des Katalysators mit anschließender Trocknung des Produktes im industriellen Maßstab viel zu aufwändig.

Eine weitere Methode der Aufarbeitung eines mit NaOH katalysierten Polycarbonates ist die Filtration der Produktes über eine Säule, die mit Bleicherde gefüllt ist (EP-A 0 798 327). Auch dieses Verfahren ist im industriellen Maßstab nur mit hohem Aufwand durchführbar und allenfalls für den Labormaßstab geeignet.

Aus dem Stand der Technik wohlbekannte Neutralisationsmittel für alkalische Katalysatoren sind die Phosphorsäure sowie deren Derivate, die auch in der Polycarbonatdiol-Synthese bereits genutzt wurden (JP2002 030143, JP 2002 069166 (Triphosphate), WO 2000/01755 (Phosphorsäure) EP-A 1 219 655 (Dibutylphosphat)). Die genannten Beispiele beziehen sich zwar nicht auf AlkalimetallKatalysatoren aber es ist natürlich denkbar, auch diese so zu neutralisieren. Es hat sich aber gezeigt, dass der Einsatz von Phosphorsäurederivaten bei stark basischen Alkalimetallkatalysatoren nur zu einer unzureichenden Deaktivierung führt und das resultierende Polycarbonatdiol noch immer eine erhöhte Reaktivität hinsichtlich der Isocyanatreaktion aufweist.

Aufgabe der vorliegenden Erfindung ist es daher, ein Verfahren zur Herstellung von (cylco)aliphatischen Polycarbonatpolyolen bereitzustellen, dass im Produkt weder zu Färbungen noch zu Trübungen führt und die Reaktivität des (cyclo)aliphatischen Polycarbonatpolyols insbesondere gegenüber Isocyanaten nicht steigert.

Es wurde nun gefunden, dass die erfindungsgemäße Aufgabe durch ein Verfahren zur Herstellung von (cyclo)aliphatischen Polycarbonatpolyolen, umfassend die Schritte
a) Umsetzung von mindestens einem (cyclo)aliphatischen Polyol und mindestens einem Alkylcarbonat in Anwesenheit mindestens eines basischen Katalysators und
b) Neutralisation durch Zugabe mindestens einer organischen Sulfonsäure mit einem Molekulargewicht von 250 bis 1000 g/mol und mindestens einer verzweigten oder unverzweigten Alkylsubstitution mit mindestens vier Kohlenstoffatomen,
wobei Schritt b) nach Schritt a) durchgeführt wird,
gelöst wird.

Die Neutralisation in Schritt b) wird im Rahmen der vorliegenden Erfindung auch als Abstoppen bezeichnet, daher werden die Sulfonsäuren folgend auch als Stopper bezeichnet. Diese erfindungsgemäße Kombination aus basischen Katalysatoren und bestimmten alkylsubstituierten Sulfonsäuren wird im Rahmen der vorliegenden Erfindung auch als Katalysatorsystem bezeichnet.

Im Rahmen der vorliegenden Erfindung ist der Begriff "wobei Schritt b) nach Schritt a) durchgeführt wird" so zu verstehen, dass die Neutralisation durch die organische Sulfonsäure in Schritt b) erst nach der Umsetzung in Anwesenheit des basischen Katalysators in Schritt a) erfolgen kann. Der Begriff soll jedoch nicht bedeuten, dass Schritt b) zwingend unmittelbar nach Schritt a) durchgeführt wird. So können beliebige optionale Schritte, wie beispielsweise Reinigungsschritte, nach Schritt a) durchgeführt werden, an die sich dann der Schritt b) anschließt, wobei die Neutralisation des in Schritt a) erhaltenen Umsetzungsprodukts im Wesentlichen durch die in Schritt b) zugegebene organische Sulfonsäure erfolgt. Im Wesentlichen bedeutet hierbei, dass die organische Sulfonsäure im molaren Verhältnis von mindestens 0,7, bevorzugt von mindestens 0,8 und besonders bevorzugt von mindestens 0,9 zum basischen Äquivalent des Katalysators eingesetzt wird.

Bevorzugt ist, dass sich an die Umsetzung in Schritt a) ein weiterer Reaktionsschritt anschließt, der der Entfernung von endständigen Alkylcarbonatgruppen im Polymer dient. Dazu wird die Reaktionsmischung, bevorzugt unter verringertem Druck, einer erhöhten Temperatur von 150 bis 250°C, bevorzugt von 170 bis 220°C und besonders bevorzugt von 180 bis 210°C ausgesetzt und das entstehende Alkanol abdestilliert.

Vorliegend ist unter (cyclo)aliphatischen Polycarbonatpolyolen zu verstehen, dass cycloaliphatische Struktureinheiten und/oder verzweigte aliphatische Struktureinheiten und/oder unverzweigte aliphatische Struktureinheiten vorliegen. Bevorzugt liegen unverzweigte aliphatische Struktureinheiten vor.

Geeignete basische Katalysatoren sind beispielsweise Natriumhydroxid, Kaliumhydroxid, Natriummethanolat, Kaliummethanolat, Natriumacetat, Kaliumacetat, Titantetraisopropylat, Titantetrabutylat, weitere Titanalkoholate, Ytterbiumacetylacetonat, andere Seltenerdacetylacetonate, Zinkacetylacetonat, Zinnacetylacetonat, Natriumacetylacetonat, Zinnoctoat, dessen technische Gemische, Aluminiumisopropylat, weitere Aluminiumalkoholate, aber auch starke aminische Basen wie beispielsweise 1,8-Diazabicyclo[5.4.0]undec-7-en (DBU) oder 1,5-Diazabicyclo[4.3.0]non-5-en (DBN).

In einer ersten bevorzugten Ausführungsform ist der Katalysator ein basisches Salz aus der Reihe der Alkalimetalle. Unter der Reihe der Alkalimetalle werden Lithium, Natrium, Kalium, Rubidium und Cäsium, besonders bevorzugt Lithium, Natrium und Kalium, ganz besonders bevorzugt Natrium und Kalium und insbesondere ganz besonders bevorzugt Natrium verstanden.

Als Anionen geeigneter basischer Katalysatoren sind solche bevorzugt, die basisch sind oder unter Reaktionsbedingungen basische Eigenschaften hervorbringen können. Beispielsweise genannt seien: Hydroxide, Oxide, Carbonate, Hydrogencarbonate, Phosphate, Silikate, Alkoholate, wie z.B. Methanolate, Ethanolate, Propanolate. und Salze von organischen Säuren, wie z.B. Formiate, Acetate, Propionate. Dabei ist es auch denkbar, solche Salze *in situ* zu erzeugen, etwa indem das metallische Alkalimetall mit dem entsprechenden Alkohol oder der Säure umgesetzt wird.

Konkrete Beispiele für besonders bevorzugt geeignete basische Katalysatoren sind Natriumhydroxid, Kaliumhydroxid, Natriummethanolat, Kaliummethanolat, Natriumacetat, Kaliumacetat. Besonders bevorzugt sind Natriummethanolat oder Kaliummethanolat.

Es können erfindungsgemäß auch Mischungen von zwei und mehr basischen Katalysatoren verwendet werden.

Die erfindungsgemäß verwendeten basischen Katalysatoren können sowohl als Feststoff als auch in Lösung eingesetzt werden.

Die Konzentration der erfindungsgemäß verwendeten Katalysatoren und/oder der Mischungen liegt vorzugsweise zwischen 1 ppm bis 10000 ppm, bevorzugt zwischen 5 ppm und 500 ppm besonders bevorzugt zwischen 20 ppm und 150 ppm, jeweils bezogen auf das Gesamtgewicht der eingesetzten (cyclo)aliphatischen Polyole und Dialkylcarbonate.

Die Reaktionstemperatur der Umesterungsreaktion eines organischen Carbonats mit einem aliphatischen Polyol unter erfindungsgemäßer Verwendung der Katalysatoren zur Herstellung von aliphatischen Oligocarbonatenpolyolen mit einer Molmasse zwischen 500 und 5000 g/mol liegt vorzugsweise zwischen 40°C und 250°C, bevorzugt zwischen 60°C und 200°C und besonders bevorzugt zwischen 90°C und 170°C insbesondere zwischen 110°C und 160°C.

Als Alkylcarbonate können z.B. Dimethylcarbonat (DMC), Diethylcarbonat (DEC), Ethylencarbonat, Propylencarbonat eingesetzt werden. Bevorzugt werden die Dialkylcarbonate Dimethylcarbonat oder Diethylcarbonat eingesetzt. Ganz besonders bevorzugt wird Dimethylcarbonat verwendet.

Als Reaktionspartner der Umesterungsreaktion der organischen Carbonate zur Herstellung aliphatischer Oligocarbonatpolyole unter erfindungsgemäßer Verwendung der Katalysatoren können (cyclo)aliphatische Polyole mit 2 bis 25 C-Atomen (linear, cyclisch, verzweigt, unverzweigt, gesättigt oder ungesättigt) mit einer OH-Funktionalität ≥ 2 eingesetzt werden, wobei die OH-Funktionalität primär, sekundär oder tertiär und bevorzugt primär oder sekundär sein kann, wobei auch beliebige Gemische dieser OH-Funktionalitäten vorliegen können. Besonders bevorzugt sind die OH-Funktionalitäten primär.

Als Beispiele seien genannt: Ethylenglykol, 1,2 Propylenglykol, 1,3-Propylenglykol, 1,3-Butandiol, 1,4-Butandiol, 1,5-Pentandiol, 1,7-Heptandiol, 1,8-Ocantdiol, 1,9-Nonandiol, 1,10-Decandiol, 1,11-Undecandiol, 1,12-Dodecandiol, 3-Methyl-1,5-pentandiol, 1,6-Hexandiol, 2-Ethylhexandiol, 2-Methyl-1,3-propandiol, Cyclohexandimethanol, Dimerdiol, Diethylengykol, Dipropylenglykol, Tripropylenglykol, Dibutylenglykol, Trimethylolpropan, Pentaerythrit, hydriertes Bisphenol A, Tricyclodecyldimethanol.

Ebenso können Polyole erfindungsgemäß eingesetzt werden, die aus einer Ringöffnungsreaktion eines Lactons mit einem aliphatischen Alkohol (linear, cyclisch, verzweigt, unverzweigt, gesättigt oder ungesättigt) mit einer OH-Funktionalität ≥ 2 (primär, sekundär oder tertiär) hervorgegangen sind, wie z.B. das Addukt aus ε-Caprolacton und 1,6-Hexandiol oder ε-Caprolacton und Trimethylolpropan sowie deren Mischungen.

Es können auch kurzkettige Polyether eingesetzt werden, vorzugsweise Polyethylenglykole, Polypropylenglykole oder auch Polybutylenglykole. Solche kurzkettigen Polyether haben ein Molekulargewicht von nicht mehr als 800 g/mol, bevorzugt von weniger als 500 g/mol. Solche kurzkettigen Polyether sind vorzugsweise difunktionell.

Schließlich können auch Mischungen verschiedener oben erwähnter (cyclo)aliphatischer Polyole als Edukte eingesetzt werden.

Bevorzugt werden aliphatische oder cycloaliphatische, verzweigte oder unverzweigte, primäre oder sekundäre Polyole mit einer OH-Funktionalität ≥ 2. Besonders bevorzugt werden aliphatische, verzweigte oder unverzweigte, primäre Polyole mit einer Funktionalität ≥ 2. Ganz besonders bevorzugt ist der Einsatz von 1,6-Hexandiol und/oder 1,5-Pentandiol.

Die Umesterungsreaktion zwischen einem organischen Carbonat und einem aliphatischen Polyol unter erfindungsgemäßer Verwendung der Katalysatoren kann sowohl unter Atmosphärendruck als auch unter vermindertem oder erhöhtem Druck von 10⁻³ bis 10³ bar, bevorzugt von 1 bis 10 bar, durchgeführt werden.

Erfindungswesentlich ist der Zusatz eines Stoppers zu dem (cyclo)aliphatischen Polycarbonatpolyol, bevorzugt nach der Entfernung der endständigen Alkylcarbonatgruppen. Erfindungsgemäß wird als Stopper eine organische Sulfonsäure mit einem Molekulargewicht von 250 bis 1000 g/mol, bevorzugt von 300 bis 500 g/mol, und mindestens einer verzweigten oder unverzweigten Alkylsubstitution mit mindestens vier Kohlenstoffatomen zugegeben. Bevorzugt weist die organische Sulfonsäure ein Molekulargewicht von 300 bis 500 g/mol und mindestens eine verzweigte oder unverzweigte Alkylsubstitution mit mindestens acht Kohlenstoffatomen auf. Beispiele für solche organischen Sulfonsäuren sind Tetrapropylenbenzolsulfonsäure oder Dodecylbenzolsulfonsäure bzw. deren Isomere. Bevorzugt ist, dass die organische Sulfonsäure Tetrapropylenbenzolsulfonsäure, Dodecylbenzolsulfonsäure und/oder ein technisches Isomerengemisch der Dodecylbenzolsulfonsäure ist. Besonders bevorzugt ist Dodecylbenzolsulfonsäure bzw. das technische Isomerengemisch derselben.

Der Stopper dient der Neutralisation des basischen Katalysators und wird in einer weiteren bevorzugten Ausführungsform im molaren Verhältnis von 0,7 bis 3,0, bevorzugt von 0,8 bis 1,5 und besonders bevorzugt von 0,9 bis 1,2 zum basischen Äquivalent des Katalysators eingesetzt. Ganz besonders bevorzugt ist ein molares Verhältnis von 0,9 bis 1,0, da hier ein Produkt erhalten wird, das weder sauer noch in erheblichem Maß basisch ist.

Offenbart ist auch ein (cyclo)aliphatisches Polycarbonatpolyol, hergestellt oder herstellbar nach dem erfindungsgemäßen Verfahren. Somit sind (cyclo)aliphatische Polycarbonatpolyole, erhältlich oder erhalten aus (cyclo)aliphatischen Polyolen und Alkylcarbonaten unter Verwendung von basischen Katalysatoren, wobei als Neutralisationsmittel mindestens eine organische Sulfonsäure mit einem Molekulargewicht von 250 bis 1000 g/mol und mindestens einer verzweigten oder unverzweigten Alkylsubstitution mit mindestens vier Kohlenstoffatomen eingesetzt wird ebenfalls offenbart.

Das offenbarte (cyclo)aliphatische Polycarbonatpolyol hat ein zahlenmittleres Molekulargewicht (Mn) von 250 g/mol bis 5000 g/mol, bevorzugt von 500 g/mol bis 3000 g/mol und besonders bevorzugt von 800 g/mol bis 2500 g/mol. Das zahlenmittlere Molekulargewicht wird über die OH-Funktionalität in Kombination mit der OH-Zahl bestimmt.

Die OH-Funktionalität eines offenbarten (cyclo)aliphatischen Polycarbonatpolyols liegt zwischen 1,8 und 3,0; bevorzugt zwischen 1,9 und 2,5 und ganz besonders bevorzugt zwischen 1,94 und 2,00. Die OH-Funktionalität kann mittels ¹H-NMR-Spektroskopie bestimmt werden.

Ein weiterer Gegenstand der Erfindung ist auch die Verwendung von mindestens einer organischen Sulfonsäure mit einem Molekulargewicht von 250 bis 1000 g/mol und mindestens einer verzweigten oder unverzweigten Alkylsubstitution mit mindestens vier Kohlenstoffatomen als Stopper bei der Polycarbonatpolyol-Herstellung zur Senkung der Reaktivität und/oder Erhöhung der Trübungsstabilität von Polycarbonatpolyolen.

Die offenbarten (cyclo)aliphatischen Polycarbonatpolyole eignen sich beispielsweise als Baustein zur Herstellung von wässrigen Polyurethandispersionen. Diese Polyurethandispersionen finden z.B. Einsatz als Lackrohstoff für Lackbeschichtungen, bei denen es besonders auf die Kombination von Hydrolyse-, Chemikalienbeständigkeit und hoher Elastizität sowie Schlagfestigkeit ankommt. Eine weitere Einsatzmöglichkeit dieser Polyurethandispersionen, welche die erfindungsgemäßen (cyclo)aliphatischen Polycarbonatdiole enthalten, ist die Textilbeschichtung. Auch hier kommt es auf die Kombination von Hydrolyse-, Chemikalienbeständigkeit und hoher Elastizität an.

Daher ist eine wässrige Polyurethandispersion, enthaltend mindestens ein mit wenigstens einer Isocyanatgruppen aufweisenden Verbindung umgesetztes erfindungsgemäßes (cyclo)aliphatisches Polycarbonatpolyol offenbart. Eine erfindungsgemäße wässrige Polyurethandispersion wird auf eine dem Fachmann beispielsweise aus der US 7,452,525 B1 an sich bekannte Art hergestellt, indem das erfindungsgemäße Polyol mit mindestens einer Isocyanatgruppen aufweisenden Verbindung umgesetzt wird. Dabei werden auch hydrophil wirkende Verbindungen, ggf. Kettenverlängerer und ggf. andere kurz- oder langkettige Polyole mit eingesetzt.

Offenbart ist auch ein Zwei-Komponenten-System, enthaltend eine Komponente A), umfassend mindestens ein erfindungsgemäßes (cyclo)aliphatisches Polycarbonatpolyol, und eine Komponente B), umfassend mindestens ein Polyisocyanat. Die erfindungsgemäßen (cyclo)aliphatischen Polycarbonatpolyole können auch in zweikomponentigen Polyurethan-Gießharzsystemen verwendet werden. Hier spielen die Lichtbeständigkeit, Vergilbungsbeständigkeit bei hohen Temperaturen sowie Chemikalienbeständigkeit eine große Rolle.

Die offenbarten (cyclo)aliphatischen Polycarbonatpolyole können auch zur Herstellung von thermoplastischen Polyurethanen und Polyestern genutzt werden. Solche Kunststoffe sind besonders schlag- und abriebfest, chemikalienbeständig und je nach Zusammensetzung auch lichtbeständig. Daher ist ein thermoplastisches Polyurethan, enthaltend mindestens ein mit wenigstens einer Isocyanatgruppen aufweisenden Verbindung umgesetztes erfindungsgemäßes (cyclo)aliphatisches Polycarbonatpolyol auch offenbart.

Offenbart sind außerdem Formkörper oder Beschichtungen, erhältlich oder erhalten aus mindestens einem erfindungsgemäßen thermoplastischen Polyurethan oder durch Aushärten mindestens einer erfindungsgemäßen wässrigen Polyurethandispersion oder durch Aushärten mindestens eines erfindungsgemäßen Zwei-Komponenten-Systems.

Als Isocyanatgruppen aufweisende Verbindungen kommen beliebige, dem Fachmann bekannte Verbindungen in Betracht.

Die Erfindung wird nachfolgend anhand von Beispielen und Vergleichsbeispielen näher erläutert, ohne sie jedoch auf diese einzuschränken.

### Beispiele

Alle Prozentangaben beziehen sich, sofern nicht abweichend angegeben, auf Gewichtsprozent.

Die Bestimmung der NCO-Gehalte in % wurde über Rücktitration mit 0,1 mol/l Salzsäure nach Reaktion mit Butylamin vorgenommen, Grundlage DIN EN ISO 11909:2007.

Die OH-Zahl wurde gemäß DIN 53240-1:2013 bestimmt.

Die Viskositätsmessungen der **Polycarbonatpolyole** wurden bei 23°C mit einem Platte-Platte Rotationsviskosimeter, RotoVisko 1 der Firma Haake, DE, mit einer Schergeschwindigkeit von 47,94/s nach DIN EN ISO 3219:1990 durchgeführt.

### Beispiel 1 (erfindungsgemäß)

### Herstellung eines Polycarbonatdiols mit Kaliummethanolat als Katalysator (Ausgangsmaterial für Beispiele 2,3,4 und 5)

In einem 151-Edelstahlreaktor mit Rührer, Intensivkühler und Thermometer wurden 6643 g 1,6-Hexandiol vorgelegt und 2 Stunden lang bei 120 °C und einem Vakuum von etwa 20mbar entwässert. Es wurde auf 80 °C abgekühlt, mit Stickstoff belüftet und zunächst 7101 g Dimethylcarbonat und dann 0,8 g Kaliummethanolat zugegeben. Anschließend wurde der Druck mit Stickstoff auf ca. 2 bar eingestellt und die Mischung unter Rühren auf 150 °C erwärmt; der Druck stieg dabei auf ca. 6 bar. Nach 24 Stunden wurde die Apparatur auf 60 °C abgekühlt und der Überdruck abgelassen. Es wurde eine Claisenbrücke mit Auffanggefäß aufgesetzt und der Reaktionsmischung nochmals 0,8 g Kaliummethylat beigemengt. Es wurde dann die Temperatur langsam, innerhalb von zwei Stunden auf 150 °C erhöht und anschließend sechs Stunden bei dieser Temperatur gehalten; dabei begann ein Dimethylcarbonat/Methanolgemisch abzudestillieren. Dann wurde die Temperatur auf 90 °C gesenkt und der Druck langsam, über zwei Stunden auf 15 mbar reduziert. Weiter wurde dann die Temperatur bei gleichbleibendem Vakuum langsam auf 190 °C erhöht und bei dieser Temperatur acht Stunden lang gehalten. Nach Reduktion der Temperatur auf 80 °C wurde die OH-Zahl des Harzes mit 48 mg KOH/g bestimmt. Es wurden nochmals 78 g 1,6-Hexandiol beigemengt und weitere 8 Stunden bei 190 °C im Vakuum gerührt. Es wurde ein bei 80 °C trübes Harz mit einer OH-Zahl von 58 mg KOH/g erhalten, das bei Raumtemperatur fest ist.

### Beispiel 2 (Vergleich)

### Neutralisation eines mit Kaliummethanolat hergestellten Polycarbonatdiols durch Campher-10-sulfonsäure

In einem 21-Glaskolben wurden 1000 g des Polycarbonatdiols aus Beispiel 1 eingewogen und auf 100 °C erhitzt. Es wurden 0,66 g Campher-10-sulfonsüre beigemengt und ca. eine Stunde lang gerührt. Das Harz war in der Schmelze weiterhin sehr trüb.

### Beispiel 3 (Vergleich)

### Neutralisation eines mit Kaliummethanolat hergestellten Polycarbonatdiols durch p-Toluolsulfonsäure

In einem 21-Glaskolben wurden 1000 g des Polycarbonatdiols aus Beispiel 1 eingewogen und auf 100 °C erhitzt. Es wurden 0,54 g p-Toluolsulfonsäure beigemengt und ca. eine Stunde lang gerührt. Das Harz war in der Schmelze weiterhin sehr trüb.

### Beispiel 4 (Vergleich)

### Neutralisation eines mit Kaliummethanolat hergestellten Polycarbonatdiols durch Dibutylphosphat

In einem 21-Glaskolben wurden 1000 g des Polycarbonatdiols aus Beispiel 1 eingewogen und auf 100 °C erhitzt. Es wurden 0,60 g Dibutylphosphat beigemengt und ca. eine Stunde lang gerührt. Das erhaltene Harz war in der Schmelze klar.

### Beispiel 5 (erfindungsgemäß)

### Neutralisation eines mit Kaliummethanolat hergestellten Polycarbonatdiols durch Dodecylsulfonsäure

In einem 21-Glaskolben wurden 1000 g des Polycarbonatdiols aus Beispiel 1 eingewogen und auf 100 °C erhitzt. Es wurden 0,93 g 4-Dodecylsulfonsäure beigemengt und ca. eine Stunde lang gerührt. Das erhaltene Harz war in der Schmelze klar.

### Beispiel 6

### Testung der Reaktivität der neutralisierten Polycarbonatdiole aus den Beispielen 2, 3, 4 und 5

Zur Prüfung der Reaktivität der Polycarbonatdiole wurden diese 80%ig in Xylol gelöst und mit der doppelten Menge (hinsichtlich NCO-OH-Verhältnis) Methylendiphenyldiisocyanat (Desmodur 2460M, Covestro AG, Leverkusen, NCO:OH = 2,0) bei 50 °C umgesetzt. Die Umsetzung fand unter ständiger Kontrolle der Viskosität in einem Haake Viskotester VT550 (D=90/s) statt. Die Mischungen haben zu Beginn der Messung etwa eine Viskosität von 660 mPas (bei 50°C).

| Beispiel | Stopper | nach 10min | nach 60min | nach 90min |
|---|---|---|---|---|
| 2 (Vgl.) | Camphersulfonsäure | 1020 mPas | 4180 mPas | 6620 mPas |
| 3 (Vgl.) | p-Toluolsulfonsäure | 939 mPas | 3290 mPas | 4980 mPas |
| 4 (Vgl.) | Dibutylphosphat | 13800 mPas | nicht messbar | nicht messbar |
| 5 (erf.) | Dodecylsulfonsäure | 931 mPas | 2390 mPas | 3610 mPas |

Es ist deutlich zu erkennen, dass die Viskosität (als Anzeichen für das Fortschreiten der NCO-OH-Reaktion und damit der Reaktivität) mit den drei Sulfonsäuren aus den Beispielen 2,3 und 5 nur mäßig ansteigt, während das Dibutylphosphat in Beispiel 4 zu einer erheblich höheren Reaktivität führt. Allerdings sind die Produkte der Beispiele 2 und 3 trüb.

### Beispiel 7 (erfindungsgemäß)

### Herstellung eines Polycarbonatdiols mit Natriummethanolat als Katalysator (Ausgangsmaterial für Beispiele 8,9,10 und 11)

In einem 151-Edelstahlreaktor mit Rührer, Intensivkühler und Thermometer wurden 6643 g 1,6-Hexandiol vorgelegt und 2 Stunden lang bei 120 °C und einem Vakuum von etwa 20mbar entwässert. Es wurde auf 80°C abgekühlt, mit Stickstoff belüftet und zunächst 6583 g Dimethylcarbonat und dann 2,67 g Natriumiummethanolat (als 30%ige Lösung in Methanol) zugegeben. Anschließend wurde die Mischung unter Rühren auf ca. 90 °C erwärmt bis ein leichter Rückfluss im Kühler zu erkennen war. Nach 24 Stunden wurde die Apparatur auf 60 °C abgekühlt und eine Claisenbrücke mit Auffanggefäß aufgesetzt. Es wurde dann die Temperatur langsam, innerhalb von zwei Stunden auf 150 °C erhöht und anschließend sechs Stunden bei dieser Temperatur gehalten; dabei begann ein Dimethylcarbonat/Methanolgemisch abzudestillieren. Dann wurde die Temperatur auf 90 °C gesenkt und der Druck langsam, über zwei Stunden auf 15 mbar reduziert. Weiter wurde dann die Temperatur bei gleichbleibendem Vakuum langsam auf 190 °C erhöht und bei dieser Temperatur acht Stunden lang gehalten. Nach Reduktion der Temperatur auf 80 °C wurde die OH-Zahl des Harzes mit 154 mg KOH/g bestimmt. Es wurden nochmals 849 g Dimethylcarbonat beigemengt und ein Intensivkühler installiert. Anschließend wurde die Mischung wieder unter Rühren auf ca. 90 °C erwärmt bis ein leichter Rückfluss im Kühler zu erkennen war. Nach 24 Stunden wurde die Apparatur auf 60 °C abgekühlt und eine Claisenbrücke mit Auffanggefäß aufgesetzt. Es wurde dann die Temperatur langsam, innerhalb von zwei Stunden auf 150 °C erhöht und anschließend sechs Stunden bei dieser Temperatur gehalten; dabei begann ein Dimethylcarbonat/Methanolgemisch abzudestillieren. Dann wurde die Temperatur auf 90 °C gesenkt und der Druck langsam, über zwei Stunden auf 15mbar reduziert. Weiter wurde dann die Temperatur bei gleichbleibendem Vakuum langsam auf 190 °C erhöht und bei dieser Temperatur acht Stunden lang gehalten. Nach Reduktion der Temperatur auf 80 °C wurde die OH-Zahl des Harzes diesmal mit 47mg KOH/g bestimmt. Es wurden nun 80 g 1,6-Hexandiol beigemengt und weitere 8 Stunden bei 190 °C im Vakuum gerührt. Es wurde ein bei 80 °C trübes Harz mit einer OH-Zahl von 57 mg KOH/g erhalten, das bei Raumtemperatur fest ist.

### Beispiel 8 (Vergleich)

### Neutralisation eines mit Natriummethanolat hergestellten Polycarbonatdiols durch Dibutylphosphat

In einem 21-Glaskolben wurden 1000 g des Polycarbonatdiols aus Beispiel 7 eingewogen und auf 100 °C erhitzt. Es wurden 0,39 g Dibutylphosphat beigemengt und ca. eine Stunde lang gerührt. Das erhaltene Harz war in der Schmelze klar.

### Beispiel 9 (Vergleich)

### Neutralisation eines mit Natriummethanolat hergestellten Polycarbonatdiols durch Dibutylphosphat

In einem 21-Glaskolben wurden 1000 g des Polycarbonatdiols aus Beispiel 7 eingewogen und auf 100 °C erhitzt. Es wurden 0,78 g Dibutylphosphat beigemengt und ca. eine Stunde lang gerührt. Das erhaltene Harz war in der Schmelze klar.

### Beispiel 10 (erfindungsgemäß)

### Neutralisation eines mit Natriummethanolat hergestellten Polycarbonatdiols durch Dodecylsulfonsäure

In einem 21-Glaskolben wurden 1000 g des Polycarbonatdiols aus Beispiel 7 eingewogen und auf 100 °C erhitzt. Es wurden 0,61 g 4-Dodecylsulfonsäure beigemengt und ca. eine Stunde lang gerührt. Das erhaltene Harz war in der Schmelze klar.

### Beispiel 11 (erfindungsgemäß)

### Neutralisation eines mit Natriummethanolat hergestellten Polycarbonatdiols durch Dodecylsulfonsäure

In einem 21-Glaskolben wurden 1000 g des Polycarbonatdiols aus Beispiel 7 eingewogen und auf 100 °C erhitzt. Es wurden 0,73 g 4-Dodecylsulfonsäure beigemengt und ca. eine Stunde lang gerührt. Das erhaltene Harz war in der Schmelze klar.

### Beispiel 12

### Testung der Reaktivität der neutralisierten Polycarbonatdiole aus den Beispielen 8, 9, 10 und 11

Zur Prüfung der Reaktivität der Polycarbonatdiole wurden diese 80%ig in Xylol gelöst und mit der doppelten Menge (hinsichtlich NCO-OH-Verhältnis) Methylendiphenyldiisocyanat (Desmodur 2460M, Covestro AG, Leverkusen, NCO:OH = 2,0) bei 50 °C umgesetzt. Die Umsetzung fand unter ständiger Kontrolle der Viskosität in einem Haake Viskotester VT550 (D=90/s) statt. Die Mischungen haben zu Beginn der Messung etwa eine Viskosität von 660 mPas (bei 50 °C).

| Beispiel | Stopper | nach 10min | nach 60min | nach 90min |
|---|---|---|---|---|
| 8 (Vgl.) | Dibutylphosphat (100%) | 3040 mPas | 10300 mPas | 12400 mPas |
| 9 (Vgl.) | Dibutylphosphat (200%) | 2730 mPas | 9310 mPas | 10500 mPas |
| 10 (erf.) | Dodecylsulfonsäure (100%) | 882 mPas | 3400 mPas | 5660mPas |
| 11 (erf.) | Dodecylsulfonsäure (120%) | 767 mPas | 2140 mPas | 3140 mPas |

Auch hier ist zu erkennen, dass die Neutralisation mit der Sulfonsäure den Anstieg der Viskosität deutlich verlangsamt und damit die Reaktivität sehr deutlich senkt. Auch eine erhebliche Überdosierung des Dibutylphosphates schafft hier kaum Abhilfe. Auf der anderen Seite vermag eine leichte Überdosierung der Dodecylsulfonsäure den Effekt der Reaktivitätssenkung nochmals zu steigern.

## Patentansprüche

1. Verfahren zur Herstellung von (cyclo)aliphatischen Polycarbonatpolyolen, umfassend die Schritte,
a) Umsetzung von mindestens einem (cyclo)aliphatischen Polyol und mindestens einem Alkylcarbonat in Anwesenheit mindestens eines basischen Katalysators und
b) Neutralisation durch Zugabe mindestens einer organischen Sulfonsäure mit einem Molekulargewicht von 250 bis 1000 g/mol und mindestens einer verzweigten oder unverzweigten Alkylsubstitution mit mindestens vier Kohlenstoffatomen,
wobei Schritt b) nach Schritt a) durchgeführt wird.

2. Verfahren nach Anspruch 1, **dadurch gekennzeichnet, dass** der Katalysator ein basisches Salz aus der Reihe der Alkalimetalle ist.

3. Verfahren nach Anspruch 1 oder 2, **dadurch gekennzeichnet, dass** der Katalysator ein Natriumalkoholat oder Kaliumalkoholat ist.

4. Verfahren nach einem der Ansprüche 1 bis 3, **dadurch gekennzeichnet, dass** die organische Sulfonsäure Tetrapropylenbenzolsulfonsäure, Dodecylbenzolsulfonsäure und/oder ein technisches Isomerengemisch der Dodecylbenzolsulfonsäure ist.

5. Verfahren nach einem der Ansprüche 1 bis 4, **dadurch gekennzeichnet, dass** der Katalysator in einer Konzentration zwischen 1 ppm bis 10000 ppm, bevorzugt zwischen 5 ppm und 500 ppm und besonders bevorzugt zwischen 20 ppm und 150 ppm, jeweils bezogen auf das Gesamtgewicht der eingesetzten (cyclo)aliphatischen Polyole und Alkylcarbonate, eingesetzt wird.

6. Verfahren nach einem der Ansprüche 1 bis 5, **dadurch gekennzeichnet, dass** das Alkylcarbonat ein Dialkylcarbonat ist, bevorzugt Dimethylcarbonat und/oder Diethylcarbonat und besonders bevorzugt Dimethylcarbonat ist.

7. Verfahren nach einem der Ansprüche 1 bis 6, **dadurch gekennzeichnet, dass** die organische Sulfonsäure im molaren Verhältnis von 0,7 bis 3,0, bevorzugt von 0,8 bis 1,5, besonders bevorzugt von 0,9 bis 1,2 und ganz besonders bevorzugt von 0,9 bis 1,0 zum basischen Äquivalent des Katalysators eingesetzt wird.

8. Verfahren nach einem der Ansprüche 1 bis 7, **dadurch gekennzeichnet, dass** das (cyclo)aliphatischc Polyol 1,5-Pcntandiol und/oder 1,6-Hexandiol ist.

9. Verwendung von mindestens einer organischen Sulfonsäure mit einem Molekulargewicht von 250 bis 1000 g/mol und mindestens einer verzweigten oder unverzweigten Alkylsubstitution mit mindestens vier Kohlenstoffatomen als Stopper bei der Polycarbonatpolyol-Herstellung zur Senkung der Reaktivität und/oder Erhöhung der Trübungsstabilität von Polycarbonatpolyolen.

## Claims

1. Process for producing (cyclo)aliphatic polycarbonate polyols comprising the steps of
a) reaction of at least one (cyclo)aliphatic polyol and at least one alkyl carbonate in the presence of at least one basic catalyst and
b) neutralization by addition of at least one organic sulfonic acid having a molecular weight of 250 to 1000 g/mol and at least one branched or unbranched alkyl substitution having at least four carbon atoms,
wherein step b) is performed after step a).

2. Process according to Claim 1, **characterized in that** the catalyst is a basic salt from the group of the alkali metals.

3. Process according to Claim 1 or 2, **characterized in that** the catalyst is a sodium alkoxide or potassium alkoxide.

4. Process according to any of Claims 1 to 3, **characterized in that** the organic sulfonic acid is tetrapropylenebenzenesulfonic acid, dodecylbenzenesulfonic acid and/or a technical isomer mixture of the dodecylbenzenesulfonic acid.

5. Process according to any of Claims 1 to 4, **characterized in that** the catalyst is employed in a concentration between 1 ppm to 10 000 ppm, preferably between 5 ppm and 500 ppm and particularly preferably between 20 ppm and 150 ppm, in each case based on the total weight of the employed (cyclo)aliphatic polyols and alkyl carbonates.

6. Process according to any of Claims 1 to 5, **characterized in that** the alkyl carbonate is a dialkyl carbonate, preferably dimethyl carbonate and/or diethyl carbonate and particularly preferably dimethyl carbonate.

7. Process according to any of Claims 1 to 6, **characterized in that** the organic sulfonic acid is employed in a molar ratio of 0.7 to 3.0, preferably of 0.8 to 1.5, particularly preferably of 0.9 to 1.2 and very particularly preferably of 0.9 to 1.0 to the basic equivalent of the catalyst.

8. Process according to any of Claims 1 to 7, **characterized in that** the (cyclo)aliphatic polyol is 1,5-pentanediol and/or 1,6-hexanediol.

9. Use of at least one organic sulfonic acid having a molecular weight of 250 to 1000 g/mol and at least one branched or unbranched alkyl substitution having at least four carbon atoms as a stopper in polycarbonate polyol production to reduce the reactivity and/or increase the clouding stability of polycarbonate polyols.

## Revendications

1. Procédé de fabrication de polycarbonate-polyols (cyclo)aliphatiques, comprenant les étapes suivantes :
a) la mise en réaction d'au moins un polyol (cyclo)aliphatique et d'au moins un carbonate d'alkyle en présence d'au moins un catalyseur basique et
b) la neutralisation par ajout d'au moins un acide sulfonique organique ayant un poids moléculaire de 250 à 1 000 g/mol et au moins une substitution alkyle ramifiée ou non ramifiée contenant au moins quatre atomes de carbone,
l'étape b) étant réalisée après l'étape a).

2. Procédé selon la revendication 1, **caractérisé en ce que** le catalyseur est un sel basique de la série des métaux alcalins.

3. Procédé selon la revendication 1 ou 2, **caractérisé en ce que** le catalyseur est un alcoolate de sodium ou un alcoolate de potassium.

4. Procédé selon l'une quelconque des revendications 1 à 3, **caractérisé en ce que** l'acide sulfonique organique est l'acide tétrapropylène-benzène-sulfonique, l'acide dodécylbenzène-sulfonique et/ou un mélange technique d'isomères de l'acide dodécylbenzène-sulfonique.

5. Procédé selon l'une quelconque des revendications 1 à 4, **caractérisé en ce que** le catalyseur est utilisé en une concentration comprise entre 1 ppm et 10 000 ppm, de préférence entre 5 ppm et 500 ppm et de manière particulièrement préférée entre 20 ppm et 150 ppm, à chaque fois par rapport au poids total des polyols (cyclo)aliphatiques et des carbonates d'alkyle utilisés.

6. Procédé selon l'une quelconque des revendications 1 à 5, **caractérisé en ce que** le carbonate d'alkyle est un carbonate de dialkyle, de préférence le carbonate de diméthyle et/ou le carbonate de diéthyle et de manière particulièrement préférée le carbonate de diméthyle.

7. Procédé selon l'une quelconque des revendications 1 à 6, **caractérisé en ce que** l'acide sulfonique organique est utilisé en un rapport molaire de 0,7 à 3,0, de préférence de 0,8 à 1,5, de manière particulièrement préférée de 0,9 à 1,2 et de manière tout particulièrement préférée de 0,9 à 1,0 par rapport à l'équivalent basique du catalyseur.

8. Procédé selon l'une quelconque des revendications 1 à 7, **caractérisé en ce que** le polyol (cyclo)aliphatique est le 1,5-pentanediol et/ou le 1,6-hexanediol.

9. Utilisation d'au moins un acide sulfonique organique ayant un poids moléculaire de 250 à 1 000 g/mol et au moins une substitution alkyle ramifiée ou non ramifiée contenant au moins quatre atomes de carbone en tant qu'agent d'arrêt lors de la fabrication de polycarbonate-polyol pour la réduction de la réactivité et/ou l'augmentation de la stabilité au trouble de polycarbonate-polyols.
